# EUROPÄISCHE PATENTSCHRIFT

(11) **EP 0 680 902 B1**
(45) Veröffentlichungstag und Bekanntmachung des Hinweises auf die Patenterteilung: **23.07.1997**
(21) Anmeldenummer: 95102079.1
(22) Anmeldetag: 15.02.1995
(51) Int. Cl.: B65G 69/18

(54) **Vorrichtung zum Andocken eines Containers an einen Entleerungstrichter in der pharmazeutischen Industrie**
Container docking device at a discharging bin for the pharmaceutical industry
Dispositif d'amarage d'un conteneur à une trémie de déchargement pour l'industrie pharmaceutique

(30) Priorität: 06.05.1994 DE 4416011
(43) Veröffentlichungstag der Anmeldung: 08.11.1995
(73) Patentinhaber: L.B. BOHLE PHARMATECHNIK GmbH, D-59320 Ennigerloh (DE)
(72) Erfinder: Bohle, Lorenz Bernhard, D-59320 Ennigerloh 2 (DE); Schnittker, Ludger, D-59269 Beckum (DE)
(74) Vertreter: Habbel, Hans-Georg, Dipl.-Ing.

(56) Entgegenhaltungen:
- EP-A- 0 092 008
- EP-A- 0 547 861
- GB-A- 2 112 363

## Beschreibung

Die Erfindung bezieht sich auf eine Vorrichtung zum Andocken eines mit einer Auslaßöffnung ausgerüsteten Containers gemäß dem Oberbegriff des Hauptanspruches.

Eine Einrichtung der gattungsbildenden Art wird in der DE-C-38 16 507 beschrieben.

In der pharmazeutischen Industrie ist häufig die Übergabe pulver- oder staubförmiger Stoffe aus einem Behälter in einen anderen Behälter erforderlich, wobei sich der eine Behälter in einem bakterien- und keimfreien Raum befindet, während der andere Behälter sich in der normalen Umgebungsatmosphäre aufhält. Hierbei ist es erforderlich, daß die pulver- oder staubförmigen Stoffe nicht nur staubfrei von der ersten in die zweite Einrichtung übergeben werden, sondern es ist weiterhin erforderlich, daß während der Übergabe keine Keime in die aufnehmende Einrichtung eintreten können. In pharmazeutischen Betrieben, in denen höchste Sauberkeit, wenn nicht sogar Sterilität, gefordert wird, ist es außerdem erforderlich, daß an der Unterseite des in der normalen Umgebungsatmosphäre bewegten Behälters keine anhaftenden Keime oder dergleichen vorhanden sind. Bei der gattungsbildenden Einrichtung kann beim Ansetzen des Behälters an die Manschette immer noch ein Eindringen von Keimen in die zu beschickende Übergabevorrichtung eintreten.

Der Erfindung liegt die Aufgabe zugrunde, eine Vorrichtung zu schaffen, bei der sichergestellt ist, daß beim Andocken zweier Einrichtungen, beispielsweise eines in der Umgebungsatmosphäre bewegten Behälters an einen in steriler Umgebung stehenden Entleerungstrichter das Eintragen von Keimen durch die Unterseite des Behälters in den Entleerungstrichter ausgeschlossen wird.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt, wird vorgeschlagen, daß der sich in der normalen Umgebungsluft bewegende Container an seiner Unterseite, d. h. der Seite, mit der er mit dem Inneren des an ihn anzuschließenden Entleerungstrichters in Kontakt kommt, solange geschützt ist, wie eine Übergabe des Inhalts des Containers in den Entleerungstrichter nicht notwendig ist. Hierzu wird ein Klappenschutz vorgeschlagen, der auf die Unterseite des Containers aufgesetzt werden kann und der beispielsweise durch einen Vakuumsauger im Bereich des Entleerungstrichters von der Unterseite des Containers abgezogen wird, so daß dann diese keimfreie Unterseite des Containers auf die zwischen Container und Entleerungstrichter eingeschaltete Manschette aufgesetzt werden kann. Hierdurch wird eine nahezu sterile Übergabe des Containerinhaltes in den Entleerungstrichter erreicht.

Um auch die nach außen hin offene Seite des Entleerungstrichters bzw. der auf diesem Entleerungstrichter angeordneten Manschette zu schützen, wird weiterhin gemäß der Erfindung ein Schutzdeckel vorgeschlagen, der so mit dem Vakuumsauger kombiniert ist, daß - wenn die Einfüllöffnung des Entleerungstrichters nicht benutzt wird - dieser Schutzdeckel auf die obere Seite der Manschette aufgesetzt werden kann. Beim Anlegen der Oberseite des Vakuumsaugers an die Unterseite des Klappenschutzes wird gleichzeitig der Schutzdeckel mit abgehoben, so daß in einem Arbeitsgang zwei wichtige und die Sterilität des übergebenden Gutes sicherstellende Arbeiten durchgeführt werden können.

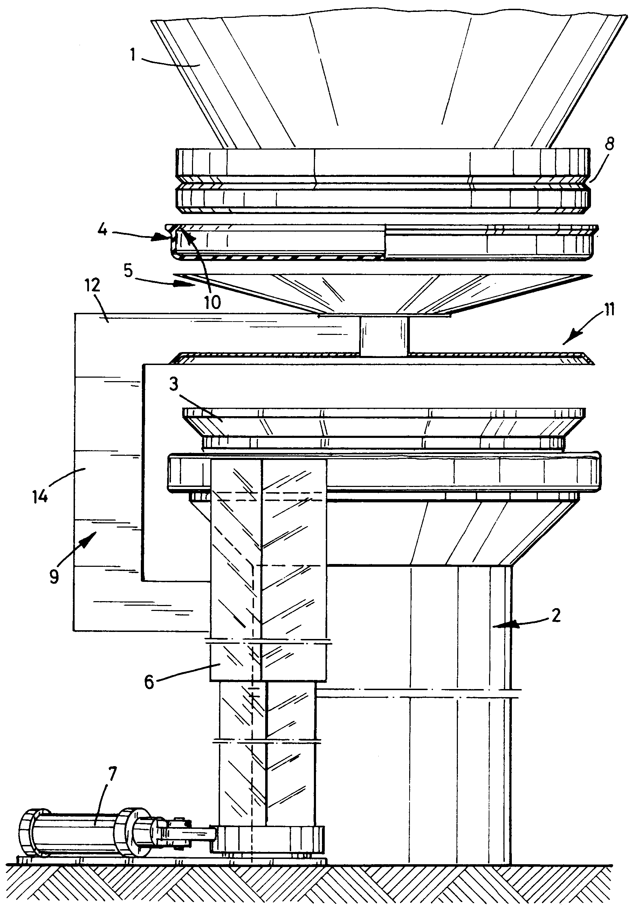

Ein Ausführungsbeispiel der Erfindung wird nachfolgend anhand der Zeichnung erläutert.

In der Zeichnung ist der Teil eines Containers 1 gezeichnet, bei welchem die an sich bekannte Entleerungsöffnung nicht zu erkennen ist, wobei aber der untere Rand dieses Containers im äußeren Bereich eine Einschnürung 8 aufweist.

Unterhalb des Containers 1 ist ein Klappenschutz 4 dargestellt, der aus einem tassenförmigen Bauteil besteht, daß über die Unterseite des Containers 1 aufgesetzt werden kann, wobei dann an der Oberkante des Klappenschutzes 4 vorgesehene nach innen ragende Innennasen 10 in die Einschnürungen 8 des Containers einrasten und hierdurch den Klappenschutz 4 festhalten. Das Aufsetzen des Klappenschutzes 4 an die Unterseite des Containers 1 kann über eine Hubeinrichtung 6 erfolgen, an deren Oberseite ein Vakuumsauger 5 angeordnet ist, auf dem der Klappenschutz 4 aufruht. Wird diese Hubeinrichtung 6 betätigt, wird der auf dem Vakuumsauger 5 aufruhende Klappenschutz 4 an die Unterseite des Containers angeschlossen.

An die Hubeinrichtung 6 schließt eine Tragvorrichtung 9 an, die bei dem dargestellten Ausführungsbeispiel einen oberen horizontalen Arm 12 und einen vertikalen Arm 14 aufweist, so daß es möglich ist, daß diese Tragvorrichtung 9 in den Raum zwischen die Unterseite des Containers 1 und die Oberseite der Manschette 3 eingreifen kann.

Unterhalb des Containers 1 ist in der Zeichnung ein Entleerungstrichter 2 dargestellt, dessen Oberseite durch eine Manschette 3 abgeschlossen wird, die zum Stand der Technik gehört. Die Manschette 3 besteht aus einem oberen Abschnitt und einem unterem Abschnitt, wobei der obere Abschnitt relativ fest ausgebildet ist, d. h. die Wandung des oberen Abschnittes können keine radial gerichteten Bewegungen ausführen, wobei der Übergang zwischen dem unteren und dem oberen Abschnitt so gestaltet ist, daß hier eine die Nachgiebigkeit der Manschette 3 bewirkende Ausgestaltung liegt, d. h. bei Andocken kann sich der obere Abschnitt der Manschette 3 etwas in den unteren Abschnitt der Manschette 3 hineinbewegen, so daß dadurch der erforderliche Anpreßdruck des oberen Randes der Manschette 3 an die Unterseite des Containers 1 erreicht wird.

Die Hubeinrichtung 6 für den Vakuumsauger 5 ist mit einer Schwenkeinrichtung 7 gekoppelt, so daß bei Betätigen der Schwenkeinrichtung 7 der obere horizontale Arm 12 der an die Hubeinrichtung 6 anschließenden und den Vakuumsauger 5 tragenden Tragvorrichtung 9 verschwenkt werden kann, so daß dadurch der Vakuumsauger 5, der Schutzdeckel 11und der Klappenschutz 4 aus dem Verbindungsbereich zwischen der Unterkante des Containers 1 und der Oberkante der Manschette 3 verbracht werden kann.

Ist der Klappenschutz 4 in der Einschnürung 8 des Containers 1 verrastet und soll nunmehr dieser Klappenschutz 4 vom Container 1 abgenommen werden, wird der Vakuumsauger 5 an die Unterseite des Klappenschutzes 4 zur Anlage gebracht und das Innere des Vakuumsaugers 5 unter Vakuum gestellt, so daß dadurch der Klappenschutz 4 fest am Vakuumsauger 5 haftet. Wird nunmehr über die Hubvorrichtung 6 der Vakuumsauger 5 nach unten bewegt, wird der Klappenschutz 4 vom Container 1 abgezogen und kann durch betätigen der Schwenkeinrichtung 7 aus dem Verbindungsbereich zwischen Container 1 und Entleerungstrichter 2 verbracht werden, so daß dann der Container 1 auf die Oberkante der Manschette 3 aufgesetzt werden kann.

Der obere horizontale Arm 12 der Tragvorrichtung 9 trägt an seiner Unterseite einen Schutzdeckel 11, der in seinem Außendurchmesser so bemessen ist, daß er den oberen Abschnitt der Manschette 3 übergreifen kann. Durch Absenken der Tragvorrichtung 9 kann also dann - wenn der Entleerungstrichter 2 nicht benötigt wird - die obere offene Öffnung durch den Schutzdeckel 11 verschlossen werden.

Hierdurch ist es möglich, den Container 1 an seiner wichtigsten Seite, nämlich der Unterseite, die mit dem Inneren des Entleerungstrichters 2 in Kontakt kommen kann, sicher zu schützen, wobei das Ansetzen dieses sogenannten Klappenschutzes 4 in einfachster Weise durch einfache mechanische Mittel erfolgen kann, wobei gleichzeitig auch die obere Einfüllöffnung des Entleerungstrichters 2 durch den Schutzdeckel 11 geschützt wird.

## Patentansprüche

1. Vorrichtung zum Andocken eines mit einer Auslaßöffnung ausgerüsteten Containers (1) an einen Entleerungstrichter (2) in der pharmazeutischen Industrie unter Zwischenschaltung einer am Entleerungstrichter (2) angeordneten Manschette (3), gekennzeichnet durch,
a) einen an die Unterseite des Containers (1) ansetzbaren Klappenschutz (4) und
b) eine Schwenk- und Hubeinrichtung (7, 6) für eine den Klappenschutz (4) betätigende Einrichtung im Bereich des Entleerungstrichters (2).

2. Vorrichtung nach Anspruch 1, dadurch gekennzeichnet, daß die Einrichtung zur Betätigung des Klappenschutzes (4) aus einem Vakuumsauger (5) besteht.

3. Vorrichtung nach Anspruch 1 oder 2, dadurch gekennzeichnet, daß der Klappenschutz (4) die ganze Unterseite des Containers (1) überspannt.

4. Vorrichtung nach einem der vorhergehenden Ansprüche, dadurch gekennzeichnet, daß der untere Bereich des Containers (1) mit einer Einschnürung (8) versehen ist, in die eine Innennase (10) des Klappenschutzes (4) einrasten kann.

5. Vorrichtung nach einem der vorhergehenden Ansprüche, gekennzeichnet durch einen auf den oberen Abschnitt der Manschette (3) aufsetzbaren und die Manschette (3) übergreifenden Schutzdeckel (11).

6. Vorrichtung nach Anspruch 5, dadurch gekennzeichnet, daß der Schutzdeckel (11) mit der Schwenk- und Hubeinrichtung (7, 6) kombiniert ist.

7. Vorrichtung nach einem der Ansprüche 5 oder 6, dadurch gekennzeichnet, daß der Schutzdeckel (11) an der Unterseite des oberen horizontalen Armes (12) der Tragvorrichtung (9) angeordnet ist.

## Claims

1. A device for use in the pharmaceutical industry for coupling a container (1) equipped with an outlet opening to an evacuation funnel (2), a collar (3) arranged on the evacuation funnel (2) being interposed therebetween, characterised by
a) a protective cap (4) capable of being fitted to the bottom of the container (1) and
b) a swivel and lift device (7, 6) for an apparatus in the region of the evacuation funnel (2) operating the protective cap (4).

2. A device according to claim 1, characterised in that the apparatus for operating the protective cap (4) consists of a vacuum suction member (5).

3. A device according to claim 1 or claim 2, characterised in that the protective cap (4) covers the entire bottom of the container (1).

4. A device according to any one of the preceding claims, characterised in that the lower region of the container (1) comprises a constriction (8) in which an internal projection (10) of the protective cap (4) may engage.

5. A device according to any one of the preceding claims, characterised by a protective cover (11) positionable on the upper portion of the collar (3) and overlapping the collar (3).

6. A device according to claim 5, characterised in that the protective cover (11) is combined with the swivel and lift device (7, 6).

7. A device according to either one of claims 5 or 6, characterised in that the protective cover (11) is arranged on the bottom of the upper horizontal arm (12) of the supporting device (9).

## Revendications

1. Dispositif d'amarrage d'un conteneur (1) doté d'une ouverture de sortie sur une trémie de déchargement (2) de l'industrie pharmaceutique avec intercalation d'une manchette (3) disposée sur la trémie de déchargement (2), caractérisé en ce qu'il comporte :
a) une protection à clapet (4) pouvant être posée sur la face inférieure du conteneur (1) et
b) un dispositif de basculement et de levage (7, 6) pour un dispositif actionnant la protection à clapet (4) dans la zone de la trémie de déchargement (2).

2. Dispositif selon la revendication 1, caractérisé en ce que le dispositif pour l'actionnement de la protection à clapet (4) se compose d'un aspirateur à vide (5).

3. Dispositif selon la revendication 1 ou 2, caractérisé en ce que la protection à clapet (4) couvre tout le côté inférieur du conteneur (1).

4. Dispositif selon l'une ou l'ensemble des revendications précédentes, caractérisé en ce que la partie inférieure du conteneur (1) est pourvue d'un étranglement (8) dans lequel peut s'engager un bec intérieur (10) de la protection à clapet (4).

5. Dispositif selon l'une ou l'ensemble des revendications précédentes, caractérisé en ce qu'il comporte un couvercle de protection (11) pouvant être posé sur la partie supérieure de la manchette (3) et recouvrant la manchette (3).

6. Dispositif selon la revendication 5, caractérisé en ce que le couvercle de protection (11) est combiné avec le dispositif de basculement et de levage (7, 6).

7. Dispositif selon l'une des revendications 5 ou 6, caractérisé en ce que le couvercle de protection (11) est disposé sur le côté inférieur du bras supérieur horizontal (12) du mécanisme porteur (9).
